# EUROPÄISCHE PATENTSCHRIFT

(11) **EP 0 751 023 B1**
(45) Veröffentlichungstag und Bekanntmachung des Hinweises auf die Patenterteilung: **27.01.1999**
(21) Anmeldenummer: 96109863.9
(22) Anmeldetag: 19.06.1996
(51) Int. Cl.: B60J 10/02, B60R 13/04

(54) **Spaltabdeckprofil mit integrierter Repairlösung**
Gap covering profile strip with integrated repairing system
Profilé de recouvrement pour une fente avec un système de réparation intégré

(30) Priorität: 28.06.1995 DE 19522980
(43) Veröffentlichungstag der Anmeldung: 02.01.1997
(73) Patentinhaber: Saar-Gummiwerk GmbH, 66687 Wadern (DE)
(72) Erfinder: Flauss, Hasso, 66606 St. Wendel-Winterbach (DE)

(56) Entgegenhaltungen:
- DE-A- 2 228 869
- DE-B- 1 172 130
- FR-A- 2 237 046

## Beschreibung

Die Erfindung betrifft ein Spaltabdeckprofil zum Überdecken definierter Spalte zwischen Scheiben und Karosserie, insbesondere bei Automobilen, wobei die Spaltabdeckung sowohl als Rahmen als auch als gerade Länge ausgeführt sein kann.

Die Spaltabdeckprofile werden in der Automobilindustrie zum Überdecken eines definierten Spaltes zwischen Scheibe und Karosserie verwendet. Bevor die Scheibe im Fahrzeug verklebt wird, wird das Spaltabdeckprofil auf die Scheibe montiert. Dabei ist es erforderlich, daß das Profii genügend Klemmkraft aufbringt, damit beim Scheibenhandling sowie beim Klebevorgang das Profil nicht von der Scheibe rutscht.

In der Praxis ist es oftmals erforderlich, daß im Scheibenbereich die Karosserie nachlackiert werden muß. Dazu wird dann das Spaltabdeckprofil von der Scheibe demontiert. Je nach Spaltbreite kann das Spaltabdeckprofil nach dem Lackieren jedoch nicht mehr eingebaut d. h. aufgesteckt werden. Für solche Fälle gibt es sogenannte Repair-Abdeckprofile, die die Aufgabe haben, als Spaltabdeckprofil nach der Reparatur zu wirken. Bei diesen Repair-Abdeckprofilen wird die Fußzone des Klemmbereiches soweit wie möglich abgeschwächt, damit das Profil bei eingebauter Scheibe eingesteckt werden kann. Der Nachteil derartiger Repair-Abdeckprofile ist, daß sie sich wegen fehlender Klemmwirkung und mangelnder Abstützfunktion als Serienlösung nicht eignen. Aus diesem Grunde ist es erforderlich, daß für die unterschiedlichen Anforderungen auch separate Abdeckprofile gefertigt werden.

Aufgabe der Erfindung ist es, die Eigenschaften eines konventionellen Spaltabdeckprofiles sowie die eines Repair-Abdeckprofils in einer Profilform bezüglich ihrer Funktionen zu integrieren. Dadurch wäre es möglich, das einundselbe Profil sowohl für Serienzwecke als auch als Repairlösungen zu verwenden. Ein derartiges Spaltabdeckprofil mit integrierter Repairlösung befriedigt dann die beiden Forderungen:
a) genügend große Klemmkraft für optimalen Sitz des Profils auf der Scheibe sowie optimale Abstützfunktion (definierten Abstand von Scheibe zu Karosserie)
b) und kurzer angeschrägter Fuß zum problemlosen Eindrücken des Profiles im Reparaturfall.

In der Praxis könnte dann auf die Anfertigung eines zweiten Profiles verzichtet werden.

Es wurde nun gefunden, daß wenn der Klemmbereich des Profiles in der Fußzone parallel zur Abdecklippe (AL-S) verlängert ist, und die Fußzone von einem sich in Profilrichtung erstreckenden, nach außen jedoch abgeschlossenen Hohlraum (H) durchzogen wird, wobei der rohrförmig bis oval gestaltete Hohlraum (H) in den Randbereichen (AK) bis nahe zur Scheibe (S) und nahe zur Karosserie (K) reicht, und daß in diesen Wandungsbereichen das Profil in Längsrichtung verlaufende Einbuchtungen besitzt, deren Einbuchtungsgegenstand bis fast an den Kopf- bzw. Fußbereich des Hohlraumes (H) heranreicht eine derartige Funktion erfüllen kann.

Durch diese Gestaltung des Hohlraumes stellen die dünnwandigen Querschnittsbereiche, zur Scheibe und zur Karosserie hin gelegen definierte Abreißkanten dar. Durch das Entfernen des vorderen Fußbereiches der Fußzone wird das Serienprofil damit zum Repairprofil.
Der auf diese Art und weise gekürzte Fußbereich stellt eine erhebliche Montageerleichterung dar. Unabhängig davon ob der vordere Fußbereich der Fußzone bei der Demontage des Profils am Kleber hängen bleibt oder nicht, erfolgt die Montage des Repairprofiles problemlos von oben. Wird z. B. der vordere Fußbereich der Fußzone bei der Demontage des Profiles nicht entfernt, kann er leicht vor der Wiedermontage an den definierten Abreißstelien abgerissen werden.

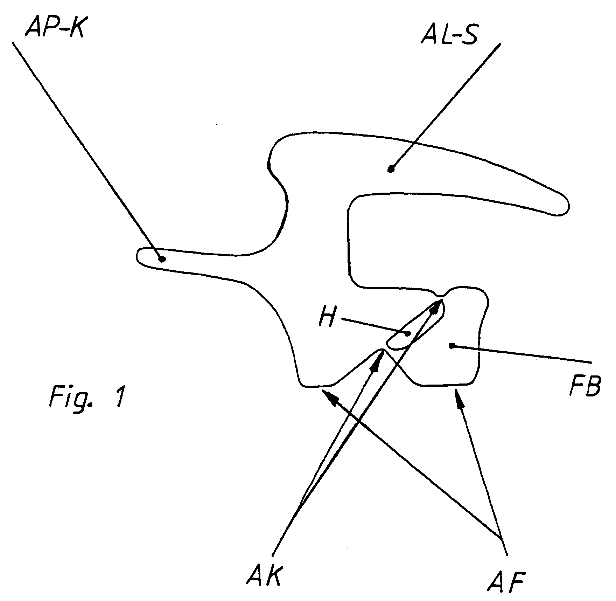

Die Figur 1 zeigt ein Spaltabdeckprofil in seiner erfindungsgemäßen Form mit integrierter Repairlösung. Dabei sind die spezifischen Profilzonen mit Abdeckprofil (AP-K) zur Karosserie, Abdecklippe (AL-S) zur Scheibe und Fußzone mit definierten Abreißkanten (AK) und entfernbarem Fußbereich (FB) wiedergegeben. Im Einbaufalle stützt sich das Spaltabdeckprofil (SAP) mit den Abstützfüßen (AF) auf der Karosserie (K) ab.

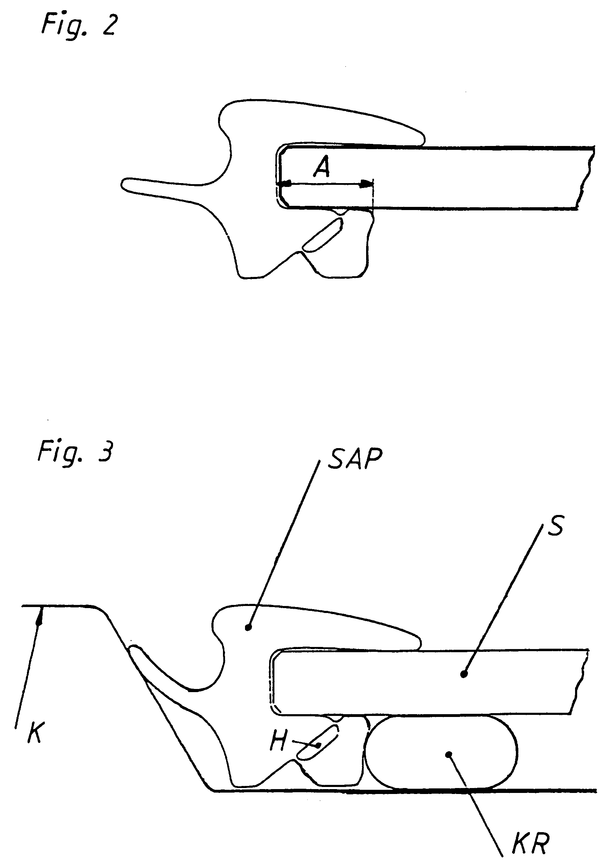

Figur 2 zeigt den relativ großen Klemmbereich durch die Erweiterung der Fußzone (Maß A) und dem damit geschaffenen optimalen Halt auf der Scheibe.
Figur 3 zeigt ein erfindungsgemäßes Spaltabdeckprofil (SAP) in seiner funktionellen Lage gegenüber Scheibe (S) und Karosserie (K). Durch die optimale Abstützfunktion des vorderen Fußbereiches (FB) entsteht ein definierter Spalt zwischen Scheibe (S) und Karosserie (K) und somit eine gleichmäßige Verteilung der Kleberaupe (KR).

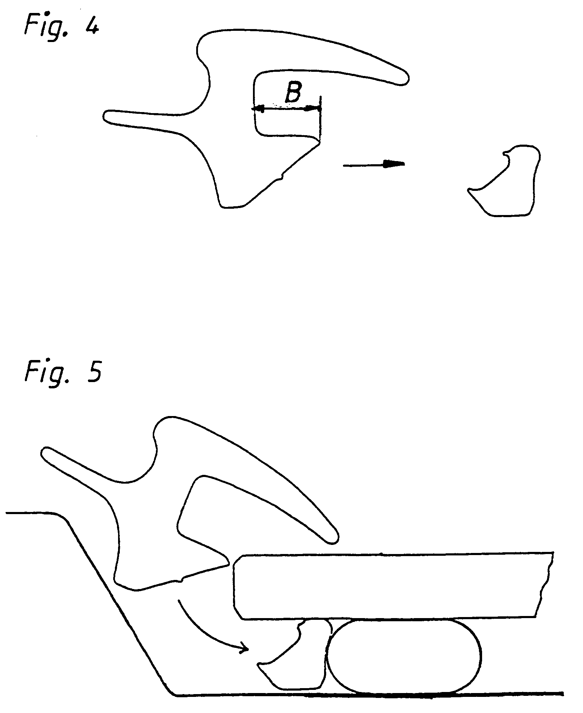

Figur 4 zeigt das erfindungsgemäße Profil nach dem Abriß des vorderen Fußbereiches (FB) der Fußzone und dadurch gekürzter Klemmlänge (Maß B) zur Montageerleichterung.
Figur 5 zeigt, wie ein erfindungsgemäßes Profil, dem durch Abreißen des vorderen Fußbereiches (FB) die Funktion eines Repairprofiles zukommt, nun bei einer Reparatur in seine funktionelle Stellung wieder eingebracht werden kann.

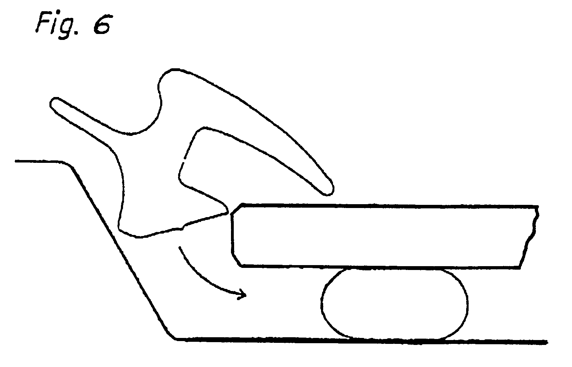

Figur 6 zeigt eine Situation wie Figur 5, jedoch mit entferntem vorderen Fußbereich.

## Patentansprüche

1. Spaltabdeckprofil zum Überdecken definierter Spalte zwischen Scheibe und Karosserie, insbesondere bei Automobilen, wobei die Spaltabdeckung sowohl als Rahmen als auch als gerade Länge ausgeführt sein kann,
dadurch gekennzeichnet, daß
der Klemmbereich des Profiles in der Fußzone parallel zur Abdecklippe (AL-S) verlängert ist, und die Fußzone von einem sich in Profilrichtung erstreckenden, nach außen jedoch abgeschlossenen Hohlraum (H) durchzogen wird, wobei der rohrförmig bis oval gestaltete Hohlraum (H) in den Randbereichen (AK) bis nahe zur Scheibe (S) und nahe zur Karosserie (K) reicht, und daß in diesen Wandungsbereichen das Profil in Längsrichtung verlaufende Einbuchtungen besitzt, deren Einbuchtungsgrund bis fast an den Kopf- bzw. Fußbereich des Hohlraumes (H) heranreicht.

## Claims

1. Gap-covering profile for covering defined gaps between glass and body, in particular in motor vehicles, whereby the gap covering can take the form of both frame and straight length, characterised in that the clamping area of the profile is elongated in the foot zone parallel to the covering lip (AL-S), and the foot zone incorporates a cavity (H) which extends in the direction of the profile but is closed on the outside, whereby in the edge areas (AK) the tubular to oval cavity (H) extends close to the glass (S) and close to the body (K), and in that in these wall areas the profile has recesses which run in the longitudinal direction and whose bottom extends almost to the head or foot area of the cavity (H).

## Revendications

1. Profilé de recouvrement pour recouvrir un intervalle déterminé entre une vitre et une carrosserie, notamment dans des automobiles, le recouvrement étant réalisé sous la forme d'un cadre ou d'un profilé droit,
caractérisé en ce que
la zone de pincement du profilé est prolongée dans la zone du pied, parallèlement à la lèvre de recouvrement (AL-S) et la zone de pied est prolongée dans la direction du profilé, vers l'extérieur, avec un volume creux fermé (H),
- le volume creux (H) de forme tubulaire jusqu'à une forme ovale arrive dans les zones marginales (AK) jusqu'à proximité de la vitre (S) et à proximité de la carrosserie (K), et,
- dans les zones de paroi, le profilé comporte des cavités dirigées dans la direction longitudinale et le fond des cavités arrive pratiquement jusqu'au niveau des zones de pied et de tête de la cavité (H).
